# EUROPÄISCHE PATENTSCHRIFT

(11) **EP 3 170 595 B1**
(45) Veröffentlichungstag und Bekanntmachung des Hinweises auf die Patenterteilung: **29.08.2018**
(21) Anmeldenummer: 16186540.7
(22) Anmeldetag: 31.08.2016
(51) Int. Cl.: B23B 31/00, B23B 31/02, B23B 31/20, B23B 51/00

(54) **WERKZEUGHALTER**
TOOL HOLDER
PORTE-OUTIL

(30) Priorität: 20.11.2015 DE 202015106359 U
(43) Veröffentlichungstag der Anmeldung: 24.05.2017
(60) Teilanmeldung: 17206252.3
(73) Patentinhaber: Simtek AG, 72116 Mössingen (DE)
(72) Erfinder: Seifermann, Norbert, 72411 Bodelshausen (DE)
(74) Vertreter: Jakelski & Althoff Patentanwälte PartG mbB

(56) Entgegenhaltungen:
- EP-A1- 2 196 274
- EP-A1- 2 826 580
- DE-A1-102011 003 785
- DE-B3-102014 111 898
- DE-U1- 20 214 442
- DE-U1-202014 009 819
- FR-A- 656 484
- GB-A- 190 919 903
- US-A- 5 466 100

## Beschreibung

Die vorliegende Erfindung betrifft einen Werkzeughalter. Der Werkzeughalter und ein Formbohrer bilden gemeinsam ein Werkzeughaltersystem.

### Stand der Technik

Formbohrer werden verwendet, wenn eine bestimmte Form, wie beispielsweise eine Stufenform, innerhalb eines Werkstücks gefertigt werden soll. Dementsprechend werden Formbohrer nicht nur in einem Standardsortiment vertrieben, sondern es fallen auch viele Sonderanfertigungen an.

Formbohrer können als Schneideinsätze oder als Wendeschneidplatten ausgeführt sein, die auf einem Grundhalter montiert sind. Die lösbare formschlüssige Befestigung des Formbohrers erfolgt hierbei in der Regel mit einer Schraube. Durch die rotierende Bewegung des Werkstücks und des Werkzeugs entsteht auf die Anlagefläche des Schraubenkopfes eine Art Hebelwirkung. Dadurch kann die Schraube die Kraft nicht mehr gleichmäßig aufnehmen und wird punktuell stark belastet. Die Folge ist ein schneller Verschleiß des Verbindungselements, bei dessen Bruch sowohl der Grundhalter, der Schneideinsatz bzw. die Wendeschneidplatte als auch das Werkstück selbst in Mitleidenschaft gezogen werden können. Durch die Art der Verbindung bzw. Befestigung der Wendeschneidplatte wird immer ein Auf- oder Unterbau am Grundhalter benötigt, um Platz für das Gewinde der Schraube zu haben. Dadurch ist diese Lösung im Bereich der Kleinstbearbeitung nur eingeschränkt nutzbar oder sogar ungeeignet. Durch das Prinzip Grundhalter und wechselbarer Schneideinsatz bzw. wechselbare Wendeschneidplatte ist diese Methode materialeffizient und sofern nicht durch Materialbruch entstandene unwiderrufliche Schäden dies verhindern, auch sehr langlebig. Hierbei ist in der Regel nur der Schneideinsatz bzw. die Wendeschneidplatte aus Hartmetall gefertigt, während der Grundhalter aus kostengünstigem Stahl gefertigt wird. Allerdings gestaltet sich ein Werkzeugwechsel bei dieser Lösung als zeitaufwendig.

Formbohren kann auch mit aus dem Vollen ausgearbeiteten Vollhartmetallrundstab-Formbohrern erfolgen. Diese Lösung ist gegenüber dem Formbohren mit Schneideinsätzen und Wendeschneidplatten bezüglich Kleinstbearbeitung weniger eingeschränkt. Sie orientiert sich sehr stark an Standardbohrern, wie sie beispielsweise auch für Bohrmaschinen verwendet werden und übernimmt im Wesentlichen deren Vor- und Nachteile. Gegenüber der Verwendung von Schneideinsätzen und Wendeschneidplatten ist diese Lösung sehr stabil und an sich verschleißfest. Dafür ist sie jedoch weniger verdrehsicher. Außerdem ist die Herstellung derartiger Formbohrer sehr aufwendig, weil die Form ins volle Hartmetall gefertigt werden muss. Da meistens das komplette Werkzeug aus Hartmetall besteht, d. h. auch der Bereich, der in der endgültigen Werkzeugaufnahme gespannt wird, ist der Materialverbrauch hierbei sehr hoch. Dokument DE 10 2014 111 898 B3 offenbart einen Werkzeughalter aufweisend einen Grundkörper, ein kreiszylinderförmiges Spannfutter mit mehreren Trennfugen und einem Außengewinde, das einen Außensteigungswinkel aufweist, wobei sich in dem Spannfutter ein Werkzeugaufnahmebereich mit kreisförmigem Querschnitt befindet, und eine Überwurfmutter mit einem Innengewinde, das einen Innensteigungswinkel aufweist, der sich von dem Außensteigungswinkel unterscheidet, wobei die Überwurfmutter an eine Anschlagfläche an dem Grundkörper anliegt, oder direkt an dem Spannfutter anliegt.

Es ist eine Aufgabe der vorliegenden Erfindung einen Werkzeughalter für einen verdrehsicheren Formbohrer bereitzustellen, der für die Kleinstbearbeitung geeignet ist. Eine weitere Aufgabe besteht darin, ein Werkzeugsystem, das den Formbohrer aufweist, bereitzustellen.

### Offenbarung der Erfindung

Ein Formbohrer für das Werkzeughaltersystem kann aus einem Rohling hergestellt werden. Dieser Rohling weist einen ersten Bereich mit im Wesentlichen viereckigem Querschnitt und einen zweiten Bereich mit im Wesentlichen viereckigem Querschnitt auf. Der erste Bereich ist parallel zum zweiten Bereich angeordnet. Dabei kontaktiert die längste Seite des Querschnitts des ersten Bereichs die längste Seite des Querschnitts des zweiten Bereichs. Unter "Kontaktieren" wird dabei sowohl ein unmittelbares Kontaktieren, als auch ein mittelbares Kontaktieren über einen Verbindungsbereich verstanden, wobei der maximale Abstand zwischen dem ersten Bereich und dem zweiten Bereich jedoch 1 mm nicht überschreitet. Ein unmittelbares Kontaktieren ohne Verbindungsbereich ist bevorzugt. Dieser Rohling liegt also nicht wie herkömmliche Formbohrerrohlinge als Rundstab vor, in den dann die gewünschte Form hineingearbeitet werden muss. Stattdessen weist er bereits eine eckige im Querschnitt annähernd Z-förmige Struktur auf, was das Herstellen einer spanformenden und leitenden Geometrie erleichtert. Auf all das Material, das bei der Herstellung eines Formbohrers aus einem Rundstab später weggearbeitet werden müsste oder das nicht zwingend benötigt wird, wird also von vornherein verzichtet.

Der Querschnitt des ersten Bereichs und der Querschnitt des zweiten Bereichs sind jeweils vorzugsweise trapezförmig. Dabei verlaufen die parallelen Seiten des Trapezes des ersten Bereichs parallel zu den parallelen Seiten des Trapezes des zweiten Bereichs. Die nicht parallelen Seiten der Trapeze verleihen dem Rohling an seinen Schmalseiten eine abgeschrägte Form, was die Herstellung einer Eingreiffläche auf einem aus dem Rohling hergestellten Formbohrer für den Spanstopper vereinfacht. Besonders bevorzugt handelt es sich bei den Trapezen um rechtwinklige bzw. orthogonale Trapeze, wobei die Seite des trapezförmigen Querschnitts des ersten Bereichs, welche über zwei rechte Winkel mit benachbarten Seiten verbunden ist, parallel zu jener Seite des trapezförmigen Querschnitts des zweiten Bereichs verläuft, die ihrerseits über zwei rechte Winkel mit benachbarten Seiten verbunden ist. Dies ermöglicht eine besonders belastbare Verbindung zwischen dem ersten Bereich und dem zweiten Bereich. Weiterhin ist es bevorzugt, dass der Querschnitt des ersten Bereichs im Wesentlichen dem Querschnitt des zweiten Bereichs entspricht. Dies führt dazu, dass der Rohling einen punktsymmetrischen Querschnitt aufweist, wodurch er bei der Herstellung eines Formbohrers gleichermaßen in einer ersten Position oder in einer zweiten gegenüber der ersten Position um 180° gedrehten zweiten Position verwendet werden kann. Auch können aus einem solchen Rohling Formbohrer hergestellt werden, welche ihrerseits punktsymmetrisch sind und somit wahlweise in einer ersten Orientierung oder in einer gegenüber der ersten Orientierung um 180° gedrehten zweiten Orientierung in einem Werkzeughalter angeordnet werden können.

Der Formbohrer ist insbesondere aus dem Rohling herstellbar. Der Formbohrer weist einen Bohrabschnitt und einen Einspannabschnitt auf. Unter dem Bohrabschnitt wird dabei jener Abschnitt des Formbohrers verstanden, welcher das zur Bearbeitung eines Werkstücks benötigte Werkzeug aufweist. Unter dem Einspannabschnitt wird jener Abschnitt des Formbohrers verstanden, welcher dazu vorgesehen ist, in einem Werkzeugaufnahmebereich eines Werkzeughalters eingespannt zu werden. Der Einspannabschnitt weist einen ersten Einspannbereich mit im Wesentlichen viereckigem Querschnitt und einen zweiten Einspannbereich mit im Wesentlichen viereckigem Querschnitt auf. Der erste Einspannbereich ist parallel zum zweiten Einspannbereich angeordnet. Die längste Seite des Querschnitts des ersten Einspannbereichs kontaktiert die längste Seite des Querschnitts des zweiten Einspannbereichs. Ein solcher Formbohrer kann aus dem Rohling gemäß dem ersten Aspekt der Erfindung hergestellt werden, ohne dass eine Bearbeitung sämtlicher Flächen des Formbohrers notwendig wäre. Der Einspannabschnitt kann deshalb in bevorzugten Ausführungsformen des Formbohrers insbesondere solche Geometrien aufweisen, die auch für die Form des Rohlings bevorzugt sind.

In einem ersten Aspekt der Erfindung wird die Aufgabe durch einen Werkzeughalter mit den Merkmalen des Anspruchs 1 gelöst. Dieser weist einen Grundkörper auf, in dem sich ein Werkzeugaufnahmebereich mit nicht kreisförmigem Querschnitt befindet. Weiterhin weist er ein kreiszylinderförmiges Spannfutter mit mehreren Trennfugen und einem Außengewinde auf, welches einen Außensteigungswinkel aufweist. Unter kreiszylinderförmig wird erfindungsgemäß eine nicht konische Form des Spannfutters verstanden, welche auch keine konischen Teilbereiche aufweist. Schließlich weist er eine Überwurfmutter mit einem Innengewinde auf, das einen Innensteigungswinkel aufweist. Der Außensteigungswinkel unterscheidet sich von dem Innensteigungswinkel. Die Überwurfmutter liegt an einer Anschlagfläche an dem Grundkörper an oder direkt an dem Spannfutter an. Unter einer Anschlagfläche wird dabei eine Fläche verstanden, welche orthogonal zur Längsachse des Grundkörpers verläuft und an der die Überwurfmutter beim Aufdrehen auf das kreiszylinderförmige Spannfutter anschlägt. Diese Ausführung des Spannfutters gewährleistet eine gleichmäßige Druckverteilung beim Anziehen der Überwurfmutter und ermöglicht die Befestigung eines Formbohrers gemäß dem zweiten Aspekt der Erfindung in dem Werkzeugaufnahmebereich mit sehr hoher Verdrehsicherheit. Auf diese Weise ermöglicht der Werkzeughalter das Einspannen eines Formbohrers mit einer schlanken Form seines Einspannbereichs, was mit herkömmlichen Werkzeughaltern, deren Werkzeugaufnahmebereich einen kreisförmigen Querschnitt aufweist, nicht möglich wäre.

Um zu gewährleisten, dass über ein Spannfutter, welches hinreichend kurz ist, damit es den Einspannbereich eines Formbohrers so aufnehmen kann, dass dieser mit seinem Ende am Grundkörper anschlägt, beim Anziehen der Übermutter ein so großer Druck auf den Einspannbereich ausgeübt werden kann, dass dieser sicher im Spannfutter gehalten wird, beträgt der Gewindespitzenwinkel des Außengewindes bevorzugt mindestens 60°. Besonders bevorzugt liegt er im Bereich von 90° bis 135°.

Die Gewindesteigung des Innengewindes der Überwurfmutter gemäß der Norm DIN 13-1 liegt bevorzugt im Bereich von 0,75 mm bis 1,50 mm. Hierdurch wird verhindert, dass die Überwurfmutter beim Anziehen überspringt oder sich löst.

Das Spannfutter und die Überwurfmutter bestehen vorzugsweise jeweils aus einem Material, das ein Elastizitätsmodul von mindestens 180 kN/mm² aufweist. Dadurch wird sichergestellt, dass ein starkes Anziehen der Überwurfmutter möglich ist, ohne dass hierdurch die Gefahr besteht, dass die Überwurfmutter oder das Spannfutter sich bleibend verformen oder brechen. Das Elastizitätsmodul kann gemäß der Norm EN ISO 6892-1 ermittelt werden.

Bevorzugt befindet sich die Anschlagfläche an dem dem Spannfutter zugewandten Ende des Grundkörpers. Der Außensteigungswinkel ist hierbei besonders bevorzugt kleiner als der Innensteigungswinkel, um nach Anschlagen der Überwurfmutter an der Anschlagfläche ein weiteres Anziehen der Überwurfmutter und das Spannen des Spannfutters zu ermöglichen. Hierzu liegt der Außensteigungswinkel ganz besonders bevorzugt im Bereich von 99,7% bis 99,9% des Innensteigungswinkels.

Das Spannfutter weist eine sich orthogonal zu seiner Längsachse ersteckende Öffnung auf. In diese Öffnung ist ein Spanstopper so eingeführt, dass ein Befestigungsabschnitt des Spanstoppers in der Öffnung angeordnet ist und ein Spanstoppabschnitt des Spanstoppers an dem vom Grundkörper abgewandten Ende des Spanstoppers angeordnet ist. Unter dem Spanstoppabschnitt wird ein Abschnitt verstanden, welcher den Werkzeugaufnahmebereich zusammen mit dem Formbohrer so verschließt, dass ein Eindringen von dem Formbohrer abgetragenen Spänen eines Werkstücks in den Werkzeugaufnahmebereich verhindert wird. Durch die Möglichkeit den Spanstopper als vom restlichen Werkzeughalter trennbares Bauteil auszuführen, welches in der Öffnung befestigt werden kann, kann der Werkzeughalter je nach Bedarf mit unterschiedlichen Spanstoppern ausgerüstet werden, die auf unterschiedliche Werkzeuggeometrien zugeschnitten sind. Der Spanstoppabschnitt ist insbesondere kreisförmig, um ein sicheres Verschließen des Werkzeugaufnahmebereichs zu ermöglichen, während die Geometrie des Befestigungsabschnitts an die Geometrie der Öffnung im Werkzeughalter angepasst ist.

Der Spanstopper weist vorzugsweise eine entlang der Längsachse des Spannfutters durch diesen hindurchgehende Öffnung auf. Diese Öffnung ist dazu vorgesehen, um einen Formbohrer durch sie hindurchzuführen. Der Querschnitt der Öffnung weist bevorzugt einen ersten Öffnungsbereich mit im Wesentlichen viereckigem Querschnitt und einen zweiten Öffnungsbereich mit im Wesentlichen viereckigem Querschnitt auf, wobei der erste Öffnungsbereich parallel zum zweiten Öffnungsbereich angeordnet ist. Die längste Seite des Querschnitts des ersten Öffnungsbereichs kontaktiert die längste Seite des Querschnitts des zweiten Öffnungsbereichs. Um die Aufnahme eines Formbohrers zu ermöglichen, welcher aus einem Rohling gemäß dem ersten Aspekt der Erfindung gefertigt wurde, sind die bevorzugten Geometrien des Querschnitts des Rohlings auch für den Querschnitt der Öffnung im Spanstopper bevorzugt.

In einem zweiten Aspekt der Erfindung betrifft dieser ein Werkzeughaltersystem, welches einen Werkzeughalter gemäß dem ersten Aspekt der Erfindung aufweist. In dessen Einspannabschnitt ist der voranstehend beschriebene Formbohrer angeordnet. Der Querschnitt der Öffnung des Spanstoppers entspricht im Wesentlichen dem Querschnitt des Einspannabschnitts des Formbohrers. Hierdurch kann der Einspannabschnitt durch diese Öffnung hindurch in den Werkzeugaufnahmebereich des Werkzeughalters geführt werden. Im zusammengebauten Zustand verbleibt dann jedoch kein hinreichend großer offener Bereich mehr, um ein Eindringen von Spänen in den Werkzeugaufnahmebereich zu ermöglichen.

### Kurze Beschreibung der Zeichnungen

Ausführungsbeispiele der Erfindung sind in den Zeichnungen dargestellt und in der nachfolgenden Beschreibung näher erläutert.
- Fig. 1: zeigt eine isometrische Darstellung eines Rohlings.
- Fig. 2a: zeigt eine isometrische Darstellung eines Formbohrers.
- Fig. 2b: zeigt eine Stirnansicht auf die Spitze des Formbohrers gemäß Fig. 2a.
- Fig. 3a: zeigt eine isometrische Darstellung eines anderen Formbohrers.
- Fig. 3b: zeigt eine Stirnansicht auf die Spitze des Formbohrers gemäß Fig. 3a.
- Fig. 4: zeigt eine isometrische Explosionsdarstellung eines Werkzeughalters gemäß einem Ausführungsbeispiel der Erfindung.
- Fig. 5: zeigt eine Seitenansicht eines mit einem Spannfutter versehenen Grundkörpers des Werkzeughalters gemäß Fig. 4, ohne Überwurfmutter.
- Fig. 6: zeigt eine Schnittdarstellung einer Überwurfmutter des Werkzeughalters gemäß Fig. 4.
- Fig. 7a: zeigt eine isometrische Darstellung eines Spanstoppers des Werkzeughalters gemäß Fig. 4.
- Fig. 7b: zeigt eine Ansicht des Spanstoppers gemäß Fig. 7a von seiner Rückseite.
- Fig. 8a: zeigt eine isometrische Darstellung eines Werkzeughaltersystems gemäß einem Ausführungsbeispiel der Erfindung.
- Fig. 8b: zeigt eine Schnittdarstellung des Werkzeughaltersystems gemäß Fig. 8a.

### Ausführungsbeispiele der Erfindung

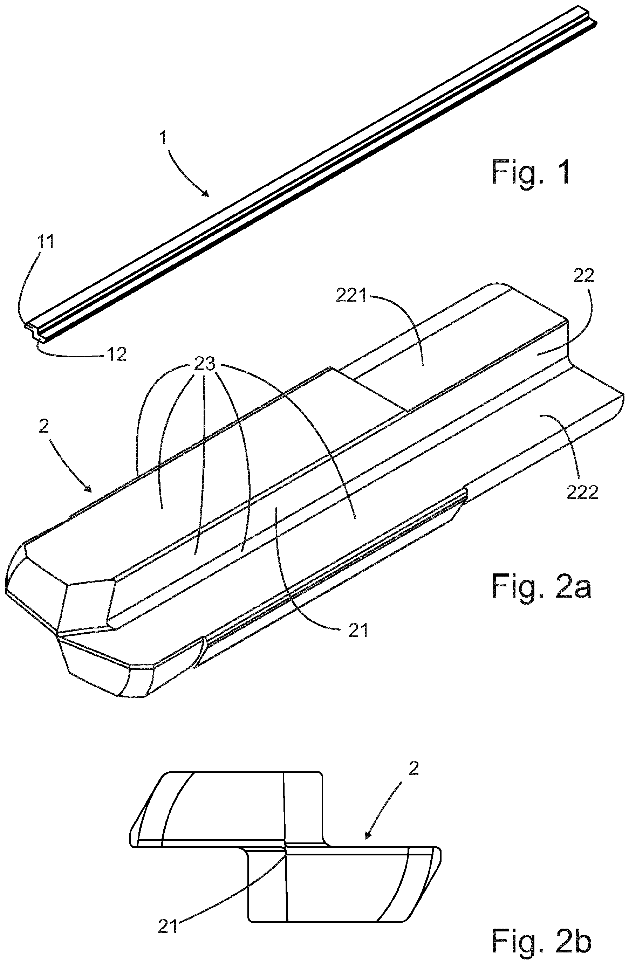

Ein Rohling 1 zur Herstellung von Formbohrern ist in Fig. 1 dargestellt. Der Rohling 1 besteht aus einem Hartmetall und weist einen ersten Bereich 11 und einen zweiten Bereich 12 auf. Die beiden Bereiche 11, 12 verfügen jeweils über denselben Querschnitt. Dieser entspricht der Form eines rechtwinkligen Trapezes. Dabei verlaufen die parallelen Seiten des Querschnitts des ersten Bereichs 11 parallel zu den parallelen Seiten des Querschnitts des zweiten Bereichs 12. Die auf den voranstehend genannten parallelen Seiten orthogonal stehenden Seiten der Trapeze sind ihrerseits parallel zueinander angeordnet. Zwischen diesen beiden parallelen Seiten kontaktiert der erste Bereich 11 unmittelbar den zweiten Bereich 12. Dabei sind die beiden Bereiche 11, 12 einstückig ausgeführt. Der Querschnitt des Rohlings 1 ist punktsymmetrisch.

Aus dem Rohling 1 können durch Materialabtrag unterschiedliche Formbohrer hergestellt werden. Ein solcher Formbohrer ist in den Fig. 2a, 2b dargestellt. Dieser Formbohrer 2 weist einen Bohrabschnitt 21 auf, welcher gefertigt wurde, indem ein Ende des Rohlings lediglich an seinen Kanten abgeschrägt wurde. Ein Einspannabschnitt 22 dieses Formbohrers 2 wurde erhalten, indem die Materialdicke des Rohlings 1 in diesem Abschnitt unter Beibehaltung seiner Geometrie verringert wurde. Dadurch weist der Einspannabschnitt 22 einen ersten Einspannbereich 221 und einen zweiten Einspannbereich 222 auf, deren Geometrie dem ersten Bereich 11 und dem zweiten Bereich 12 des Rohlings 1 bei lediglich verringerter Materialdicke entspricht. Einige Flächen 23 bleiben gegenüber dem Rohling 1 unbearbeitet. Im Übrigen ist der Formbohrer 2 kürzer als der Rohling 1, so dass aus dem Rohling 1 mehrerer Formbohrer 2 hergestellt werden können.

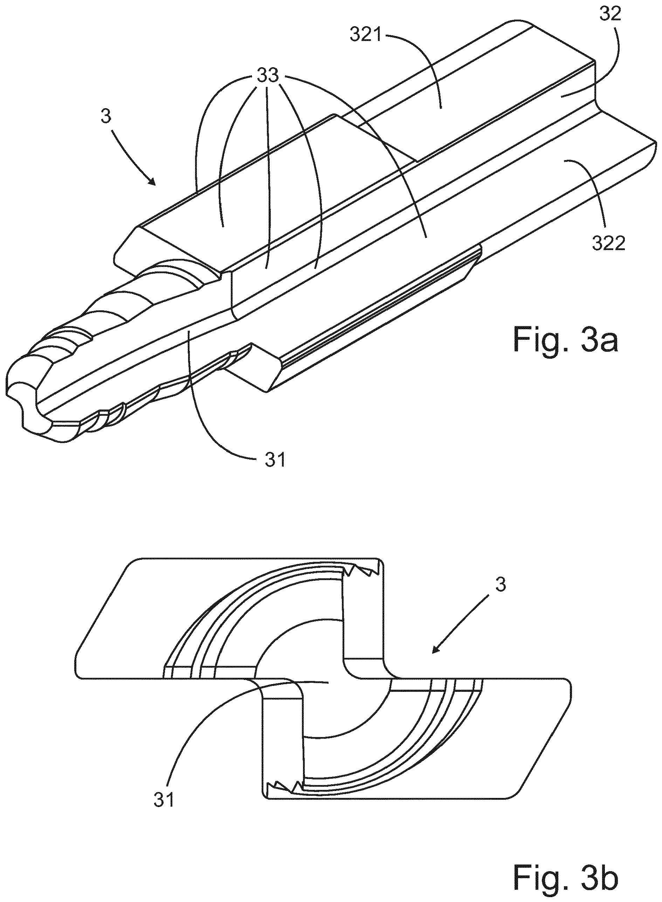

Ein Formbohrer 3 gemäß einem ist in den Fig. 3a und 3b dargestellt. Durch umfangreichen Materialabtrag wurde ein Bohrabschnitt 31 erzeugt, der eine konische Form mit mehreren Abstufungen und zwei tiefen Einschnitten aufweist. Während sich dieser deutlich vom Bohrabschnitt 21 des voranstehend beschriebenen Formbohrers 2 unterscheidet, wurde sein Einspannabschnitt 32 in derselben Weise wie der Einspannabschnitt 22 des Formbohrers 2 gemäß dem ersten Ausführungsbeispiel hergestellt, so dass dessen erster Einspannbereich 321 und sein zweiter Einspannbereich 322 den Einspannbereichen 221, 222 jenes Formbohrers 2 entsprechen. Auch an diesem Formbohrer 3 bleiben einige Flächen 33 bleiben gegenüber dem Rohling 1 unbearbeitet.

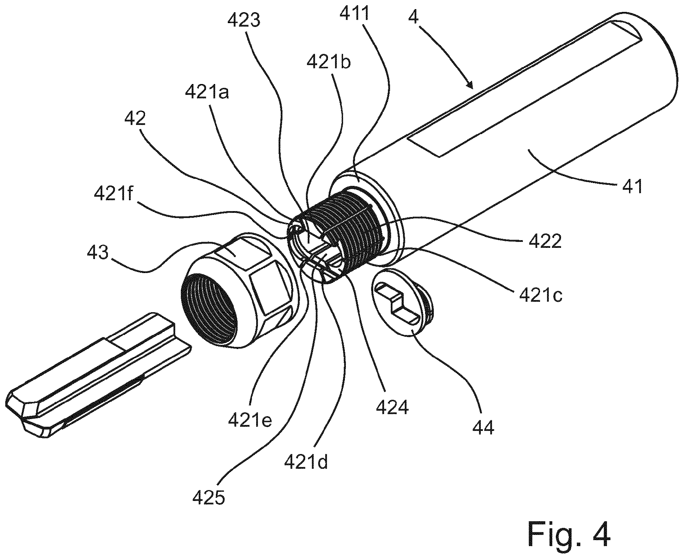

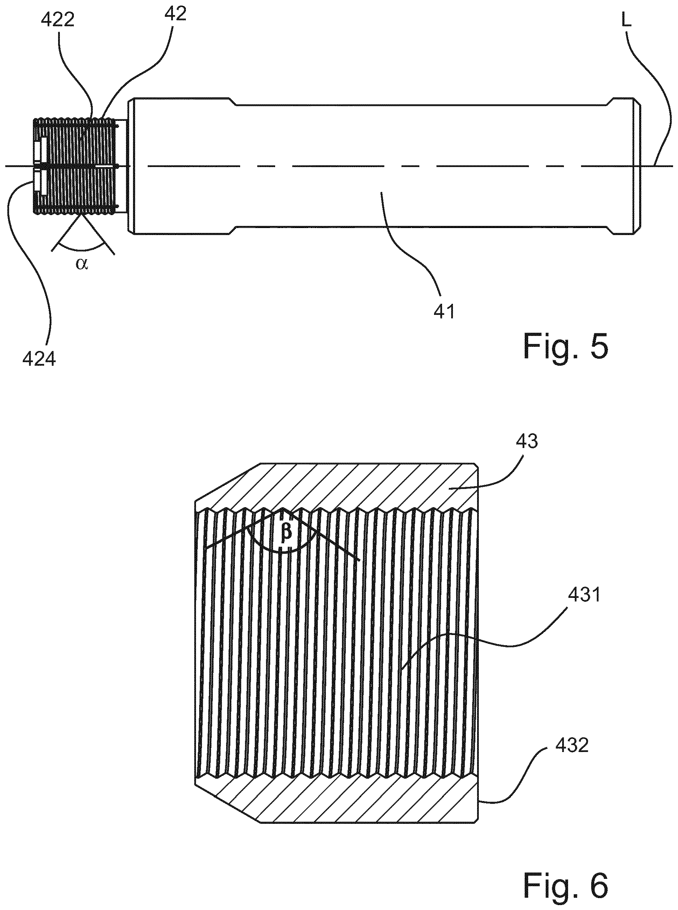

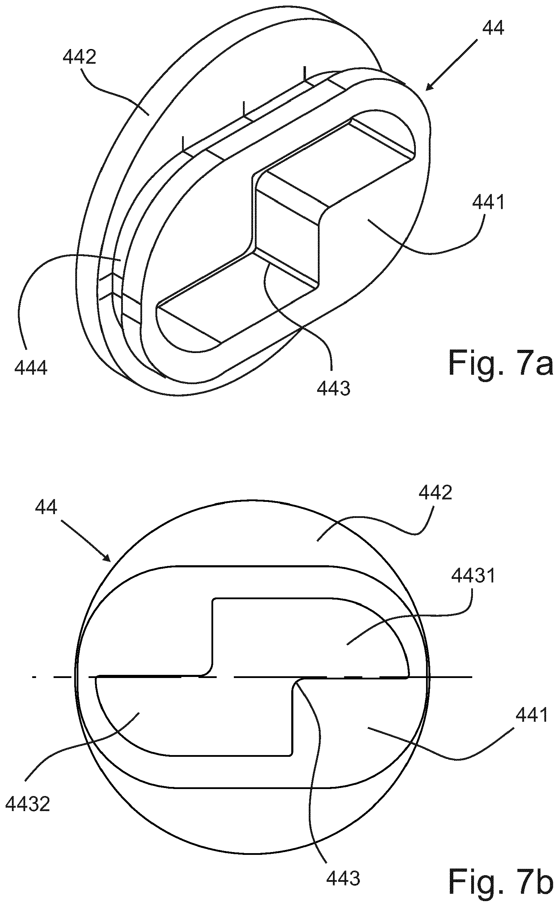

Ein Werkzeughalter 4 gemäß einem Ausführungsbeispiel der Erfindung, welcher eingerichtet ist, um die Formbohrer 2, 3 aufzunehmen, ist zusammen mit seinen Einzelteilen in den Fig. 4 bis 7b dargestellt. Er weist einen kreiszylinderförmigen Grundkörper 41 mit einer seitlichen Abflachung auf. An einem Ende des Grundkörpers 41 schließt sich ein kreiszylinderförmiges Spannfutter 42 mit sechs Trennfugen 421a - f an. Das Spannfutter 42 weist einen hohlen Innenraum auf, der sich entlang seiner Längsachse L erstreckt und an dem Grundkörper 41 endet. Dieser Innenraum fungiert als Werkzeugaufnahmebereich 425 zur Aufnahme des Einspannabschnitts 22, 32 eines Formbohrers 2, 3. Er weist einen länglichen Querschnitt auf, dessen längste Seiten parallel zueinander verlaufen und dessen Enden halbkreisförmig abgerundet sind. Zum Spannen des Spannfutters 42 ist eine Überwurfmutter 43 vorgesehen, die an ihrer Außenseite Anlageflächen aufweist, um die Überwurfmutter 43 mittels eines Schraubenschlüssels anzuziehen. Beim Anziehen der Überwurfmutter 43 schlägt diese mit ihrer Rückseite 432 zunächst an einer Anschlagfläche 411 an, welche sich an der dem Spannfutter 42 zugewandten Seite des Grundkörpers 41 befindet. Ein noch weiteres Anziehen der Überwurfmutter 43 führt zu einem Spannen des Spannfutters 42. Wie in Fig. 5 dargestellt, weist das Spannfutter 42 hierzu ein Außengewinde 422 mit einem Außenspitzenwinkel α von 120° auf. Die Überwurfmutter 43 weist wie in Fig. 6 dargestellt ist ein Innengewinde mit einem Innenspitzenwinkel β von 120° und einer Gewindesteigung von 1 mm auf. Dies ermöglicht beim Anziehen der Überwurfmutter 43 eine hohe Kraftübertragung auf das Spannfutter 42. Um hierbei ein Brechen des Werkzeughalters 4 zu verhindern, bestehen der Grundkörper 41, das Spannfutter 42 und die Überwurfmutter 43 aus Stahl mit einem E-Modul von 195 kN/mm².

An seinem dem Grundkörper 41 abgewandten Ende weist das Spannfutter 42 eine sich orthogonal zur Längsachse L des Spannfutters 42 erstreckende Öffnung 423 mit einem Hinterschnitt auf. In diese ist ein Spanstopper 44 mit einem Befestigungsabschnitt 441 eingeführt, dessen Querschnitt dem Querschnitt der Öffnung 423 im Spannfutter 42 entspricht. Ein Spanstoppabschnitt 442 mit einem kreisförmigen Querschnitt, dessen Durchmesser dem Durchmesser des Spannfutters 42 entspricht, weist eine entlang der Längsachse des Spannfutters 42 durch den gesamten Spanstopper 44 hindurchgehende Öffnung 443 auf. Der Querschnitt dieser Öffnung 443 ist so ausgebildet, dass sie die Einspannabschnitte 22, 32 der Formbohrer 2, 3 aufnehmen kann. Dazu weist sie einen ersten Öffnungsbereich 4431 und einen zweiten Öffnungsbereich 4432 auf, deren Querschnitte im Wesentlichen den Querschnitten der Einspannbereiche 221, 222 321, 322 der Formbohrer 2, 3 entsprechen, wobei die Außenkanten der rechtwinkligen Trapeze, welche im Formbohrer jeweils nur zueinander und ansonsten zu keiner anderen Seite der Einspannabschnitte 22, 32 parallel verlaufen, in der Öffnung 443 des Spanstoppers 44 abgerundet sind, so dass diese Öffnung 443 einen geringfügig größeren Querschnitt aufweist als die Einspannabschnitte 22, 32. Der Befestigungsabschnitt 441 ist über einen Verbindungsabschnitt 444 mit dem Spanstoppabschnitt 442 verbunden, wobei der Verbindungsabschnitt 444 einen Querschnitt mit derselben Form, jedoch einem geringeren Umfang als der Befestigungsabschnitt 441 aufweist, so dass der Spanstopper 44 sicher in der Öffnung 423 des Spannfutters 42 gehalten wird und nicht entlang der Längsachse L des Spannfutters 42 aus dieser herausbewegt werden kann. Nach Festziehen der Überwurfmutter 43 ist auch ein Entfernen des Spanstoppers 44 orthogonal zur Längsachse L des Spannfutters 42 ausgeschlossen.

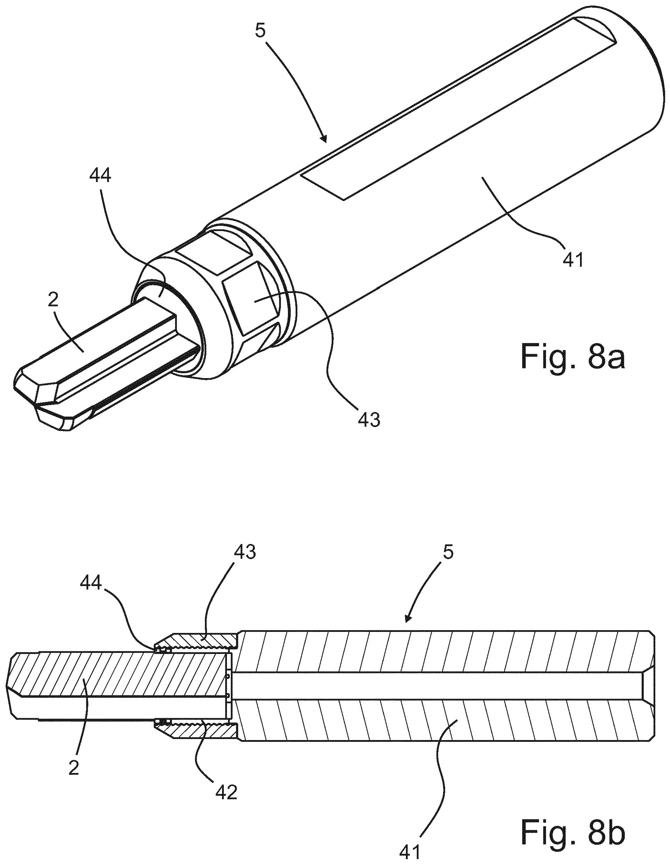

Indem ein Formbohrer 2 gemäß Fig. 2a-b durch die Öffnung 443 des Spanstoppers 44 in den Werkzeugaufnahmebereich 425 des Spannfutters 42 eingeführt wird und anschließend die Überwurfmutter 43 angezogen wird, wird ein Werkzeughaltersystem 5 erhalten, in dem der Formbohrer 2 verdrehsicher fixiert ist. Dieses ist in den Fig. 8a und 8b dargestellt. Auch der Formbohrer 3 gemäß Fig. 3a-b kann in derselben Weise im Werkzeughaltersystem 5 fixiert werden. Das Werkzeughaltersystem 5 ist für den Zweck der Kleinstbearbeitung geeignet.

## Patentansprüche

1. Werkzeughalter (4), aufweisend
- einen Grundkörper (41),
- ein kreiszylinderförmiges Spannfutter (42) mit mehreren Trennfugen (421a - 421f) und einem Außengewinde (422), das einen Außensteigungswinkel aufweist, wobei sich in dem Spannfutter (42) ein Werkzeugaufnahmebereich (425) mit nicht-kreisförmigem Querschnitt befindet, und das Spannfutter (42) eine sich orthogonal zu seiner Längsachse (L) ersteckende Öffnung (424) aufweist,
- einen Spanstopper (44), der so in die Öffnung (424) eingeführt ist, dass ein Befestigungsabschnitt (441) des Spanstoppers (44) in der Öffnung (424) angeordnet ist und ein Spanstoppabschnitt (442) des Spanstoppers (44) an dem vom Grundkörper (41) abgewandten Ende des Spanstoppers (44) angeordnet ist, und
- eine Überwurfmutter (43) mit einem Innengewinde (431), das einen Innensteigungswinkel aufweist, der sich von dem Außensteigungswinkel unterscheidet, wobei die Überwurfmutter (43) an eine Anschlagfläche (411) an dem Grundkörper (41) anliegt, oder direkt an dem Spannfutter (42) anliegt.

2. Werkzeughalter (4) nach Anspruch 1, **dadurch gekennzeichnet, dass** das Außengewinde einen Gewindespitzenwinkel (α) aufweist, der mindestens 60° beträgt.

3. Werkzeughalter (4) nach Anspruch 1 oder 2, **dadurch gekennzeichnet, dass** das Innengewinde eine Gewindesteigung im Bereich von 0,75 mm bis 1,50 mm aufweist.

4. Werkzeughalter (4) nach einem der Ansprüche 1 bis 3, **dadurch gekennzeichnet, dass** das Spannfutter (42) und die Überwurfmutter (43) jeweils aus einem Material bestehen, das ein E-Modul von mindestens 180 kN/mm² aufweist.

5. Werkzeughalter (4) nach einem der Ansprüche 1 bis 4, **dadurch gekennzeichnet, dass** die Anschlagfläche (411) sich an dem Spannfutter (42) zugewandten Ende des Grundkörpers (41) befindet.

6. Werkzeughalter (4) nach Anspruch 5, **dadurch gekennzeichnet, dass** der Außensteigungswinkel kleiner als der Innensteigungswinkel ist.

7. Werkzeughalter (4) nach Anspruch 6, **dadurch gekennzeichnet, dass** der Außensteigungswinkel im Bereich von 99,7% bis 99,9% des Innensteigungswinkels liegt.

8. Werkzeughalter (4) nach einem der Ansprüche 1 bis 7, **dadurch gekennzeichnet, dass** der Spanstopper (44) eine entlang der Längsachse (L) des Spannfutters (42) durch diesen hindurchgehende Öffnung (443) mit eine Querschnitt aufweist, welcher einen ersten Öffnungsbereich (4431) mit im Wesentlichen viereckigem Querschnitt und einen zweiten Öffnungsbereich (4432) mit im Wesentlichen viereckigem Querschnitt aufweist, wobei der erste Öffnungsbereich (4431) parallel zum zweiten Öffnungsbereich (4432) angeordnet ist und die längste Seite des Querschnitts des ersten Öffnungsbereichs (4431) die längste Seite des Querschnitts des zweiten Öffnungsbereichs (4432) kontaktiert.

9. Werkzeughaltersystem (5), aufweisend einen Werkzeughalter (4) nach Anspruch 8 in dessen Werkzeugaufnahmebereich (425) der Einspannabschnitt (22, 32) eines Formbohrers (2, 3) angeordnet ist, welcher einen Bohrabschnitt (21, 31) und einen Einspannabschnitt (22, 32) aufweist, wobei der Einspannabschnitt (22, 32) einen ersten Einspannbereich (221, 321) mit im Wesentlichen viereckigem Querschnitt und einen zweiten Einspannbereich (222, 322) mit im Wesentlichen viereckigem Querschnitt aufweist, der erste Einspannbereich (221, 321) parallel zum zweiten Einspannbereich (222, 322) angeordnet ist und die längste Seite des Querschnitts des ersten Einspannbereichs (221, 321) die längste Seite des Querschnitts des zweiten Einspannbereichs (222, 322) kontaktiert, wobei der Querschnitt der Öffnung (443) des Spanstoppers (44) im Wesentlichen dem Querschnitt des Einspannabschnitts (22, 32) des Formbohrers (2, 3) entspricht.

10. Werkzeughaltersystem (5) nach Anspruch 9, **dadurch gekennzeichnet, dass** der Formbohrer (2, 3) aus einem Rohling (1) herstellbar ist, der einen ersten Bereich (11) mit im Wesentlichen viereckigem Querschnitt und einen zweiten Bereich (12) mit im Wesentlichen viereckigem Querschnitt aufweist, wobei der erste Bereich (11) parallel zum zweiten Bereich (12) angeordnet ist und die längste Seite des Querschnitts des ersten Bereichs (11) die längste Seite des Querschnitts des zweiten Bereichs (12) kontaktiert.

11. Werkzeughaltersystem (5) nach Anspruch 10, **dadurch gekennzeichnet, dass** der Querschnitt des ersten Bereichs (11) und der Querschnitt des zweiten Bereichs (12) des Rohlings (1) jeweils trapezförmig sind.

12. Werkzeughaltersystem (5) nach Anspruch 10 oder 11, **dadurch gekennzeichnet, dass** der Querschnitt des ersten Bereichs (11) des Rohlings (1) im Wesentlichen dem Querschnitt des zweiten Bereichs (12) des Rohlings (1) entspricht.

## Claims

1. Tool holder (4), having
- a basic body (41),
- a circular cylindrical clamping chuck (42) having several parting lines (421a - 421f) and an external thread (422) which has an external pitch angle, wherein a tool receiving region (425) having a non-circular cross-section is located in the clamping chuck (42), and the clamping chuck (42) has an opening (424) extending orthogonally to its longitudinal axis (L),
- a chip stopper (44) that is inserted into the opening (424) in such a way that a fixing section (441) of the chip stopper (44) is arranged in the opening (424), and a chip stopper section (442) of the chip stopper (44) is arranged on the end of the chip stopper (44) facing away from the base body (41), and
- a union nut (43) having an internal thread (431) that has an internal pitch angle that differs from the external pitch angle, wherein the union nut (43) abuts on a stopping surface (411) on the base body (41) or abuts directly on the clamping chuck (42).

2. Tool holder (4) according to claim 1, **characterised in that** the external thread has a thread point angle (α) that is at least 60°.

3. Tool holder (4) according to claim 1 or 2, **characterised in that** the internal thread has a thread inclination ranging from 0.75mm to 1.50mm.

4. Tool holder (4) according to one of claims 1 to 3, **characterised in that** the clamping chuck (42) and the union nut (43) each consist of a material that has an elasticity module of at least 180 kN/mm².

5. Tool holder (4) according to one of claims 1 to 4, **characterised in that** the stopping surface (411) is located on the end of the base body (41) facing towards the clamping chuck (42).

6. Tool holder (4) according to claim 5, **characterised in that** the external pitch angle is smaller than the internal pitch angle.

7. Tool holder (4) according to claim 6, **characterised in that** the external pitch angle ranges from 99.7% to 99.9% of the internal pitch angle.

8. Tool holder (4) according to one of claims 1 to 7, **characterised in that** the chip stopper (44) has an opening (443) along the longitudinal axis (L) of the clamping chuck (42), said opening (443) passing through it and having a cross-section that has a first opening region (4431) having a substantially quadrangular cross-section and a second opening region (4432) having a substantially quadrangular cross-section, wherein the first opening region (4431) is arranged in parallel to the second opening region (4432), and the longest side of the cross-section of the first opening region (4431) contacts the longest side of the cross-section of the second opening region (4432).

9. Tool holder system (5), having a tool holder (4) according to claim 8 in whose tool receiving region (425) the clamping section (22, 32) of a moulding drill (2, 3) is arranged, which has a drill section (21, 31) and a clamping section (22, 32), wherein the clamping section (22, 32) has a first clamping section (221, 321) having a substantially quadrangular cross-section and a second clamping region (222, 322) having a substantially quadrangular cross-section, the first clamping region (221, 321) is arranged in parallel to the second clamping region (222, 322) and the longest side of the cross-section of the first clamping region (221, 321) contacts the longest side of the cross-section of the second clamping region (222, 322), wherein the cross-section of the opening (443) of the chip stopper (44) substantially corresponds to the cross-section of the clamping section (22, 32) of the moulding drill (2, 3).

10. Tool holder system (5) according to claim 9, **characterised in that** the moulding drill (2, 3) can be produced from a workpiece (1) that has a first region (11) having a substantially quadrangular cross-section and a second region (12) having a substantially quadrangular cross-section, wherein the first region (11) is arranged in parallel to the second region (12), and the longest side of the cross-section of the first region (11) contacts the longest side of the cross-section of the second region (12).

11. Tool holder system (5) according to claim 10, **characterised in that** the cross-section of the first region (11) and the cross-section of the second region (12) of the workpiece (1) are each formed to be trapezoidal.

12. Tool holder system (5) according to claim 10 or 11, **characterised in that** the cross-section of the first region (11) of the workpiece (1) substantially corresponds to the cross-section of the second region (12) of the workpiece (1).

## Revendications

1. Porte-outil (4), comprenant :
- un corps de base (41),
- un mandrin de serrage en forme de cylindre circulaire (42) avec plusieurs fentes de séparation (421a-421f) et d'un filetage extérieur (422) qui présente un angle extérieur d'inclinaison; une zone de réception d'outil (425) dotée d'une section transversale non circulaire se trouvant dans le mandrin de serrage (42), et le mandrin de serrage (42) présentant une ouverture (424) s'étendant perpendiculairement à son axe longitudinal (L),
- une butée de serrage (44) qui est introduite dans l'ouverture (424) de manière qu'une section de fixation (441) de la butée de serrage (44) est disposée dans l'ouverture (424) et qu'une section de butée de serrage (442) de la butée de serrage (44) est disposée sur l'extrémité de la butée de serrage (44) qui est détournée du corps de base (41), et
- un écrou d'accouplement (43) doté d'un filetage intérieur (431) qui présente un angle intérieur d'inclinaison qui se différencie de l'angle extérieur d'inclinaison, l'écrou d'accouplement (43) étant attenant à une surface de butée (411) du corps de base (41), ou directement attenant au mandrin de serrage (42).

2. Porte-outil (4) selon la revendication 1, **caractérisé en ce que** le filetage extérieur présente un angle sommet de filet (α) qui est d'au moins 60°.

3. Porte-outil (4) selon la revendication 1 ou 2, **caractérisé en ce que** le filetage intérieur présente un pas de filetage situé dans une plage de 0,75 mm à 1,50 mm.

4. Porte-outil (4) selon l'une des revendications 1 à 3, **caractérisé en ce que** le mandrin de serrage (42) et l'écrou d'accouplement (43) sont constitués chacun d'un matériau qui présente un module d'élasticité d'au moins 180 kN/mm².

5. Porte-outil (4) selon l'une des revendications 1 à 4, **caractérisé en ce que** la surface de butée (411) se trouve sur l'extrémité du corps de base (41) qui est tournée vers le mandrin de serrage (42).

6. Porte-outil (4) selon la revendication 5, **caractérisé en ce que** l'angle extérieur d'inclinaison est plus petit que l'angle intérieur d'inclinaison.

7. Porte-outil (4) selon la revendication 6, **caractérisé en ce que** l'angle extérieur d'inclinaison se trouve dans une plage de 99,7 % à 99,9 % de l'angle intérieur d'inclinaison.

8. Porte-outil (4) selon l'une des revendications 1 à 7, **caractérisé en ce que** la butée de serrage (44) présente une ouverture (443) qui traverse le mandrin de serrage (42) dans son axe longitudinal (L) et présente une section transversale dotée d'une première zone d'ouverture (4431) présentant une section transversale sensiblement quadrangulaire et d'une deuxième zone d'ouverture (4432) présentant une section transversale sensiblement quadrangulaire, la première zone d'ouverture (4431) étant disposée parallèlement à la deuxième zone d'ouverture (4432) et le côté le plus long de la section transversale de la première zone d'ouverture (4431) étant en contact avec le côté le plus long de la section transversale de la deuxième zone d'ouverture (4432).

9. Système porte-outil (5), comprenant un porte-outil (4) selon la revendication 8 dans la zone de réception d'outil (425) duquel la section de serrage (22, 32) d'une mèche de forme (2, 3) est disposée, laquelle comporte un segment de perçage (21, 31) et une section de serrage (22, 32), la section de serrage (22, 32) comportant une première zone de serrage (221, 321) présentant une section transversale sensiblement quadrangulaire et une deuxième zone de serrage (222, 322) présentant une section transversale sensiblement quadrangulaire, la première zone de serrage (221, 321) étant disposée parallèlement à la deuxième zone de serrage (222, 322) et le côté le plus long de la section transversale de la première zone de serrage (221, 321) étant en contact avec le côté le plus long de la section transversale de la deuxième zone de serrage (222, 322), la section transversale de l'ouverture (443) de la butée de serrage (44) correspondant sensiblement à la section transversale de la section de serrage (22, 32) de la mèche de forme (2, 3).

10. Système porte-outil (5) selon la revendication 9, **caractérisé en ce que** la mèche de forme (2, 3) peut être produite à partir d'une ébauche (1) qui comporte une première zone (11) présentant une section transversale sensiblement quadrangulaire et une deuxième zone (12) présentant une section transversale sensiblement quadrangulaire, la première zone (11) étant disposée parallèlement à la deuxième zone (12) et le côté le plus long de la section transversale de la première zone (11) étant en contact avec le côté le plus long de la section transversale de la deuxième zone (12).

11. Système porte-outil (5) selon la revendication 10, **caractérisé en ce que** la section transversale de la première zone (11) et la section transversale de la deuxième zone (12) de l'ébauche (1) sont chacune de forme trapézoïdale.

12. Système porte-outil (5) selon la revendication 10 ou 11, **caractérisé en ce que** la section transversale de la première zone (11) de l'ébauche (1) correspond sensiblement à la section transversale de la deuxième zone (12) de l'ébauche (1).
